# EUROPÄISCHE PATENTSCHRIFT

(11) **EP 0 817 366 B1**
(45) Veröffentlichungstag und Bekanntmachung des Hinweises auf die Patenterteilung: **12.01.2000**
(21) Anmeldenummer: 97107690.6
(22) Anmeldetag: 10.05.1997
(51) Int. Cl.: H02P 7/67

(54) **Einrichtung zum abwechselnden Betreiben von mehreren AC-Synchron-Servomotoren und Drahtrichtmaschine mit einer solchen Einrichtung**
Device for operating alternately several AC synchronous servo-motors and wire straightening machine with such a device
Appareil de commande en alternance de plusieurs servo-moteurs synchrones et machine à dresser les fils métalliques avec un tel appareil

(30) Priorität: 28.06.1996 AT 39196
(43) Veröffentlichungstag der Anmeldung: 07.01.1998
(73) Patentinhaber: PROGRESS AG, 39042 Brixen (IT)
(72) Erfinder: Nussbaumer, Erich, 39010 Nals (IT)
(74) Vertreter: Torggler, Paul Norbert

(56) Entgegenhaltungen:
- DE-A- 3 113 564
- DE-A- 3 742 494
- GB-A- 2 001 213

## Beschreibung

Die Erfindung betrifft eine Einrichtung zum abwechselnden Betreiben von mehreren AC-Synchron-Servomotoren.

Bei verschiedenen Maschinen, beispielsweise bei Drahtrichtmaschinen für mehrere Drähte mit unterschiedlichen Durchmessern, sind als Antriebe mehrere Servomotoren vorhanden, welche abwechselnd betrieben werden. Durch ihre speziellen Eigenschaften, die weiter unten nochmals angesprochen werden, sind dabei häufig als Servomotoren AC-Synchronmotoren besonders gut geeignet. Aufgrund der zum Betreiben der AC-Synchron-Servomotoren notwendigen Synchronmotorregler hatte der Einsatz von AC-Synchron-Servomotoren in solchen Anwendungen bisher den Nachteil von hohen anfallenden Kosten.

Aus der GB-A 2 001 213 ist eine Einrichtung zum Betreiben von mehreren Synchronmotoren über einen einzelnen Synchronmotorregler bekannt. Diese können allerdings nicht abwechselnd betrieben werden, sondern laufen immer gleichzeitig und mit gleichen Drehzahlen.

In der DE-A1 31 13 564 ist weiters eine Regeleinrichtung zur Drehzahlregelung mehrerer Motoren gezeigt, wobei ein einzelner Frequenzumformer vorgesehen ist, der den einzelnen Motoren über von einer Umschalteinheit angesteuerten Schalteinheiten in den Hauptstromleitungen der Motoren selektiv zuschaltbar ist. Es handelt sich aber nicht um Synchron- sondern um Asynchronmotoren und die einzelnen Motoren werden nicht alternierend sondern gleichzeitig betrieben.

Aufgabe der Erfindung ist es, den Nachteil hoher Kosten der herkömmlichen Einrichtungen zum abwechselnden Betreiben von mehreren AC-Synchron-Servomotoren zu überwinden.

Erfindungsgemäß gelingt dies durch eine Einrichtung mit den Merkmalen des Anspruches 1 und durch ein Verfahren mit den Merkmalen des Anspruch 9.

Besonders aufgrund der Empfindlichkeit der Resolversignale und der Notwendigkeit der phasenrichtigen Ansteuerung der Synchronmotoren hat bisher in der Fachwelt ein Vorurteil gegenüber der Verwendung eines einzelnen Synchronmotorreglers für mehrere AC-Synchron-Servomotoren bestanden.

Eine Drahtrichtmaschine gemäß Anspruch 6, welche mit der erfindungsgenmäßen Einrichtung versehen ist, kann kostengünstig mit den vorteilhaften AC-Synchron-Servomotoren ausgestattet werden.

Weitere Vorteile und Einzelheiten der Erfindung werden im folgenden anhand der beiliegenden Zeichnungen erläutert.

In diesen zeigt:
Fig. 1 ein Blockschaltbild einer erfindungsgemäßen Einrichtung,
Fig. 2 die Schalteinheiten für die Resolversignalumschaltung, und
Fig. 3 eine mit einer erfindungsgemäßen Einrichtung ausgestattete Drahtbiegemaschine.

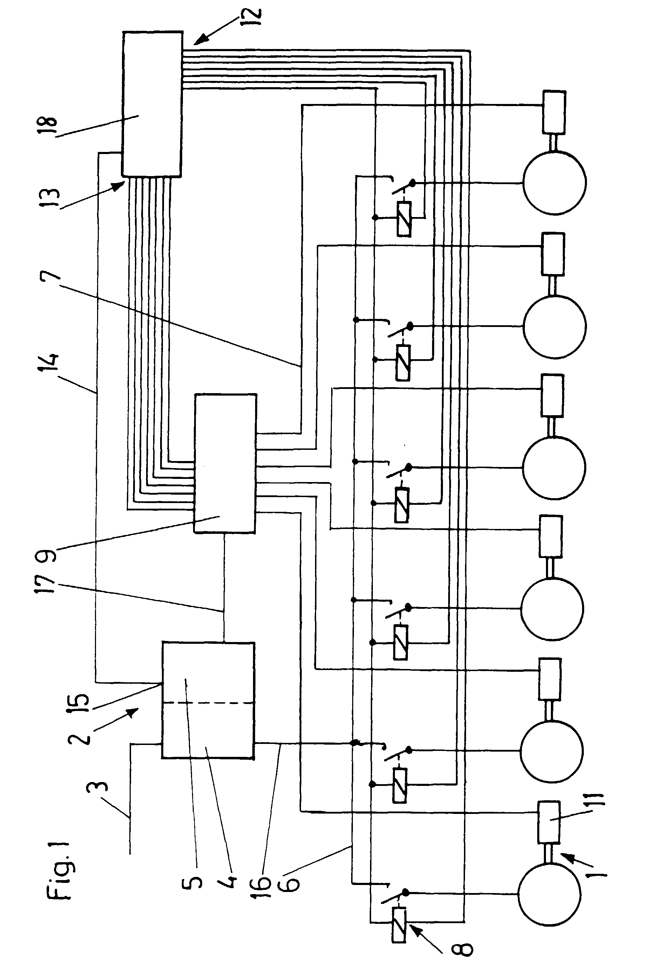

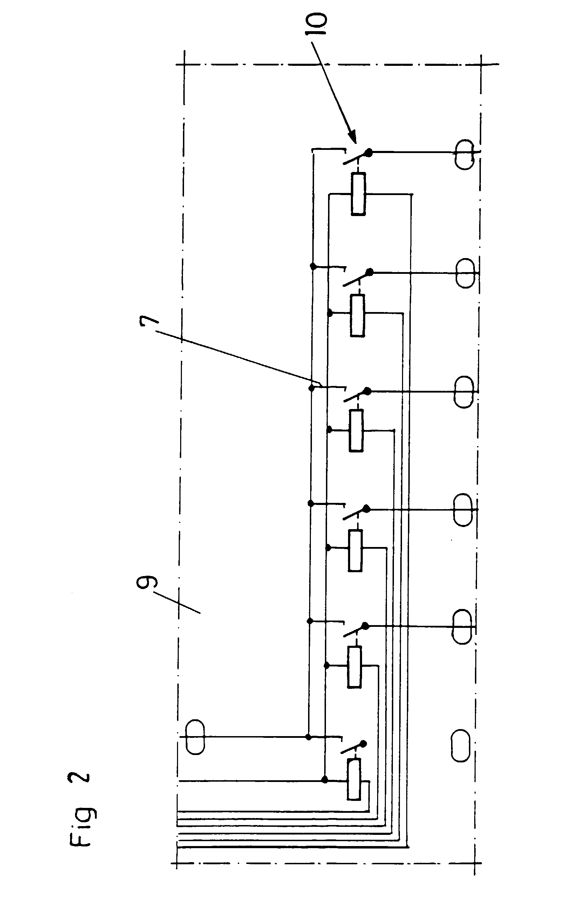

In Fig. 1 sind sechs AC-Synchron-Servomotoren 1 gezeigt, welche abwechselnd von einem einzigen Synchronmotorregler 2 betrieben werden. Der Synchronmotorregler 2 ist über eine Netzleitung 3 mit Netzspannung verbunden und weist einen Leistungsteil 4 und einen Steuerteil 5 auf. Solche Synchronmotorregler sind hinreichend bekannt und werden an dieser Stelle nicht detailliert beschrieben. Am Ausgang des Leistungsteiles 4 des Motors 2 ist eine Leitung 16 angeschlossen, welche sich in die Hauptstromleitungen 6 abzweigt. Die Hauptstromleitungen 6 sind über Schalteinheiten 8 mit den Servomotoren 1 verbunden. Am Steuerteil 5 des Synchronmotorreglers 2 ist eine Leitung 17 angeschlossen, welche sich im Gehäuse 9 in die Resolvenleitungen 7 verzweigt (siehe Fig. 2). Die Resolverleitungen 7 sind über Schalteinheiten 10 mit den Resolvern 11 der Motoren 1 verbunden.

Jeder der Resolver 11 weist eine auf dem Anker des Synchronmotors 1 befestigte Spule auf, welche durch ein Resolversignal aus dem Steuerteil 5 des Synchronmotorreglers 2 erregt wird und dadurch ein magnetisches Wechselfeld erzeugt, das mit dem Anker rotiert. In zwei weiteren Spulen, die in einem Winkel von 90° gegeneinander am Stator angeordnet sind, werden dadurch Sinus- und Cosinus-Signale induziert. Diese amplitudenmodulierten Signale können im Synchronmotorregler zur Bestimmung der Ankerposition des Servomotors 1 ausgewertet werden.

Jede der Resolverleitungen 7 umfaßt also zumindest sechs Pole, und zwar zwei für das Erregersignal aus dem Synchronmotorregler und jeweils zwei für die Sinus- und Cosinus-Signale aus den Resolvern. Daneben können noch weitere Pole vorgesehen sein, beispielsweise für einen im Motor angeordneten Thermowiderstand, um eine Abschaltung des Motors im Falle einer Überlastung zu ermöglichen.

Die Umschaltung zwischen den einzelnen Servomotoren 1 wird mittels einer Umschaltsteuerung 18, die als SPS (speicherprogrammierbare Steuerung) ausgebildet ist, durchgeführt. Die SPS besitzt dazu eine erste Gruppe von Ausgängen 12, über die die Schütze- oder Schalteinheiten 8 in den Hauptstromleitungen 6 angesteuert werden können. Über eine zweite Gruppe von Ausgängen 13 können die im Gehäuse 9 angeordneten Schalteinheiten 10 in den Resolverleitungen 7 angesteuert werden. Aufgrund der Empfindlichkeit der Resolversignale sind die Schalteinheiten 10 als Reed-Relais ausgebildet. Weiters ist das Gehäuse 9 gegen Störfelder abgeschirmt.

Die Umschaltung der Schalteinheiten 8 und 10 durch die Umschaltsteuerung 18 erfolgt gekoppelt. Jeweils werden die Schalteinheiten 8, 10 in den Hauptstromleitungen 6 und in den Resolverleitungen 7 des abzuschaltenden Motors geöffnet und die Schalteinheiten 8, 10 des einzuschaltenden Motors 1 geschlossen. Während des Umschaltens zwischen zwei Servomotoren 1 wird der Ausgangsstrom des Leistungsteiles 4 des Synchronmotorreglers 2 deaktiviert, um Schäden am Leistungsteil 4 oder einen Funkenüberschlag an den Schützen- bzw. Schalteinheiten 8 zu verhindern. Bei kommerziell erhältlichen Synchronmotorreglern ist normalerweise bereits standardmäßig ein Eingang 15 vorhanden, über den der Ausgangsstrom des Leistungsteiles 4 deaktiviert werden kann. Dieser Eingang 15 wird während des Umschaltens zwischen zwei Servomotoren 1 über eine Steuerleitung 14 von der Umschaltsteuerung 18 entsprechend angesteuert.

Damit die Ansteuerung aller Motoren 1 phasenrichtig erfolgt, müssen die Resolver den gleichen Resolveroffset aufweisen, d.h. bei gleichen Ankerpositionen der Servomotoren 1 muß die aus den Sinus- und Cosinussignalen der Resolver 11 der einzelnen Servomotoren 1 bestimmte Position gleich sein. Dies gelingt bei den meisten Typen von Servomotoren durch einen mechanischen Abgleich am Resolver.

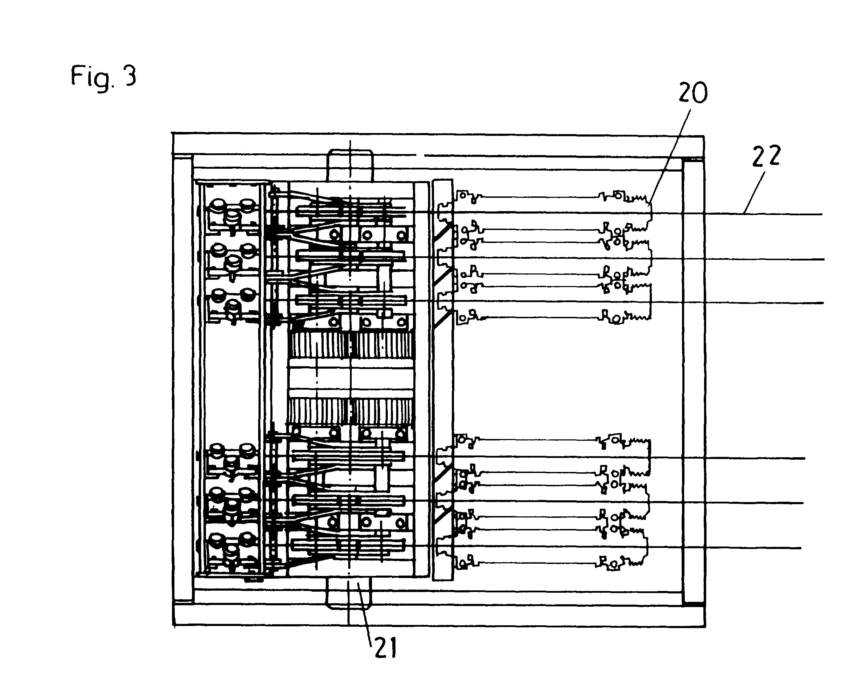

In Fig. 3 ist nun als Anwendung einer erfindungsgemäßen Einrichtung eine Drahtrichtmaschine zum abwechsenlden Ausrichten von mehreren Drähten 22 mit unterschiedlichen Durchmessern gezeigt. Der jeweils auszurichtende Draht 22 wird von einer Vorschubeinheit 21 in der Fig. 3 von links nach rechts durch einen Richtrotor 20 transportiert, in dem die Ausrichtung des Drahtes 22 erfolgt. Da zu einem bestimmten Zeitpunkt immer nur einer der Drähte ausgerichtet wird, muß der Vorschub nur für diesen auszurichtenden Draht erfolgen und nur der Richtrotor 20 dieses Drahtes angetrieben werden. In der Vorschubeinheit 21 ist dazu ein einzelner Servomotor vorgesehen, dessen Bewegung mechanisch an jeweilige Rollen übertragen wird, welche den auszurichtenden Draht vorwärts bewegen.

Eine abwechselnde mechanische Kopplung der Richtrotoren 20 an nur einen einzelnen Antriebsmotor ist hingegen kaum möglich, deshalb ist für jeden Richtrotor 20 ein eigener in Fig. 3 nicht dargestellter Servomotor vorgesehen. Für diese Servomotoren kommen asynchrone Drehstrommaschinen nicht in Frage, da sie beim Anfahren zu schwach sind, Gleichstrommaschinen haben dagegen einen zu hohen Verschleiß. Meist werden die Richtrotoren 20 daher mittels Hydraulikmotoren betrieben, deren Nachteile hinlänglich bekannt sind.

Die Synchronmotoren sind beim Anfahren stark genug, haben einen geringen Verschleiß und relativ niedrigen Energiebedarf. Bisher hatten sie allerdings den Nachteil von relativ hohen Kosten. Durch die erfindungsgemäße Einrichtung gelingt es nun, die Kosten wesentlich zu reduzieren, da nur ein Synchronmotorregler benötigt wird.

Eine vorteilhafte Ausgestaltung der Drahtrichtmaschine erhält man dadurch, daß der Servomotor zum abwechselnden Antrieb der Richtrotoren 20 mit dem Servomotor der Vorschubeinrichtung 21 gekoppelt wird. Dazu ist eine in Fig. 3 nicht dargestellte Einrichtung zur Erfassung der Geschwindigkeit des auszurichtenden Drahtes in der Form eines Meßrades, über das der auszurichtende Draht läuft, vorgesehen. Das Ausgangssignal des Meßrades wird der SPS zugeführt, welche daraus die Geschwindigkeitseingangssignale für den Synchronmotorregler des Servomotors der Vorschubeinheit 21 und für den Synchronmotorregler des Servomotors für die Richtrotoren 20 bestimmt. Durch diese Koppelung der Geschwindigkeiten der Vorschubeinheit 21 und der Richtrotoren 20 wird der Draht auch beim Anfahren und beim Herunterfahren der Drahtrichtmaschine korrekt ausgerichtet, und die sonst üblichen Bremsstellen und Anfahrstellen, an denen der Draht verbogen oder sogar beschädigt ist, treten nicht auf.

## Patentansprüche

1. Einrichtung zum abwechselnden Betreiben von mehreren AC-Synchron-Servomotoren (1), welchen ein einzelner gemeinsamer Synchronmotorregler (2) zugeordnet ist, dessen Leistungsteil (4) über Hauptstromleitungen (6) mit allen Servomotoren (1) verbindbar ist und dessen Steuerteil (5) über Resolverleitungen (7) mit den Resolvern (11) aller Servomotoren (1) verbindbar ist, wobei zur Umschaltung zwischen den einzelnen Servomotoren (1) in den Hauptstromleitungen (6) und in den Resolverleitungen (7) Schalteinheiten (8, 10) angeordnet sind, welche von einer gemeinsamen Umschaltsteuerung (18) betätigbar sind, und wobei beim Umschalten zwischen zwei Servomotoren (1) der Ausgangsstrom des Leistungsteiles (4) des Synchronmotorreglers (2) deaktiviert ist.

2. Einrichtung nach Anspruch 1, dadurch gekennzeichnet, daß die Schalteinheiten (8, 10) in den Hauptstromleitungen (6) und in den Resolverleitungen (7) von der gemeinsamen Umschaltsteuerung (18) gekoppelt betätigbar sind, wobei die Schalteinheiten (8, 10) in den Hauptstromleitungen (6) und in den Resolverleitungen (10) des jeweils angesteuerten Servomotors (1) geschlossen sind und die Schalteinheiten (8, 10) in den Hauptstromleitungen (6) und in den Resolverleitungen (7) der anderen Servomotoren (1) geöffnet sind.

3. Einrichtung nach einem der Ansprüche 1 oder 2, dadurch gekennzeichnet, daß als Schalteinheiten (10) in den Resolverleitungen (7) Reed-Relais vorgesehen sind.

4. Einrichtung nach einem der Ansprüche 1 bis 3, dadurch gekennzeichnet, daß die Schalteinheiten (10) in den Resolverleitungen (7) gegen Störfelder abgeschirmt sind.

5. Einrichtung nach Anspruch 4, dadurch gekennzeichnet, daß die Schalteinheiten (10) in den Resolverleitungen (7) in einem gemeinsamen Gehäuse (9) angeordnet sind.

6. Drahtrichtmaschine zum abwechselnden Ausrichten von mehreren Drähten, insbesondere mit unterschiedlichen Durchmessern, wobei die Richtrotoren für die Drähte über AC-Synchron-Servomotoren antreibbar sind, mit einer Einrichtung zum abwechselnden Betreiben der AC-Synchron-Servomotoren, nach einem der Ansprüche 1 bis 5.

7. Drahtrichtmaschine nach Anspruch 6, dadurch gekennzeichnet, daß der Vorschub der Drahtrichtmaschine ebenfalls über einen AC-Synchron-Servomotor antreibbar ist, der einen eigenen Synchronmotorregler aufweist, wobei der Synchronmotorregler des Servomotors für den Vorschub und der Synchronmotorregler der Servomotoren für die Richtrotoren bezüglich ihrer Geschwindigkeitseingangssingale gekoppelt sind.

8. Drahtrichtmaschine nach Anspruch 7, dadurch gekennzeichnet, daß eine Einrichtung zur Erfassung der Geschwindigkeit des auszurichtenden Drahtes (22), vorzugsweise ein Meßrad, zur Bereitstellung der Geschwindigkeitseingangssignale des Synchronmotorreglers für den Servomotor der Vorschubeinheit (21) und des Synchronmotorreglers für den Servomotor der Richtrotoren (20) vorgesehen ist.

9. Verfahren zum abwechselnden Betreiben von mehreren AC-Synchron-Servomotoren, dadurch gekennzeichnet, daß der Resolveroffset durch einen mechanischen Abgleich an den Resolverteilen (11) der Servomotoren (1) für alle Servomotoren (1) gleich eingestellt wird und daß sowohl der vom Leistungsteil eines einzigen Synchronmotorreglers (2) gelieferte Hauptstrom als auch die vom Steuerteil (5) des Synchronmotorreglers (2) bzw. von den Resolverteilen (11) der Servomotoren (1) gelieferten Resolversignale mittels einer gemeinsamen Umschaltsteuerung (18) über jeweilige Schaltereinheiten (8, 10) zwischen jeweils einem der Servomotoren (1) und dem einzigen Synchronmotorregler (2) durchgeschaltet werden.

10. Verfahren nach Anspruch 9, dadurch gekennzeichnet, daß während der Umschaltung von einem Servomotor (1) auf einen anderen das Leistungsteil (4) des Synchronmotorreglers (2) deaktiviert wird.

## Claims

1. Apparatus for alternately operating a plurality of AC synchronous servomotors (1) with which there is associated a single common synchronous motor regulator (2) whose power portion (4) can be connected to all servomotors (1) by way of main current lines (6) and whose control portion (5) can be connected to the resolvers (11) of all servomotors (1) by way of resolver lines (7), wherein switching units (8, 10) which are actuable by a common change-over switching control (18) are arranged for switching over between the individual servomotors (1) in the main current lines (6) and in the resolver lines (7), and wherein upon switching over between two servomotors (1) the output current of the power portion (4) of the synchronous motor regulator (2) is deactivated.

2. Apparatus according to claim 1 characterised in that the switching units (8, 10) in the main current lines (6) and in the resolver lines (7) are actuable in coupled relationship by the common change-over switching control (18), wherein the switching units (8, 10) in the main current lines (6) and in the resolver lines (10) of the respectively actuated servomotor (1) are closed and the switching units (8, 10) in the main current lines (6) and in the resolver lines (7) of the other servomotors (1) are open.

3. Apparatus according to one of claims 1 and 2 characterised in that reed relays are provided as switching units (10) in the resolver lines (7).

4. Apparatus according to one of claims 1 to 3 characterised in that the switching units (10) in the resolver lines (7) are shielded in relation to interference fields.

5. Apparatus according to claim 4 characterised in that the switching units (10) in the resolver lines (7) are arranged in a common housing (9).

6. A wire straightening machine for alternately straightening a plurality of wires, in particular of different diameters, wherein the straightening rotors for the wires are drivable by way of AC synchronous servomotors, having an apparatus for alternately operating the AC synchronous servomotors according to one of claims 1 to 5.

7. A wire straightening machine according to claim 6 characterised in that the feed of the wire straightening machine is also drivable by way of an AC synchronous servomotor which has its own synchronous motor regulator, wherein the synchronous motor regulator of the servomotor for the feed and the synchronous motor regulator of the servomotors for the straightening rotors are coupled in respect of their speed input signals.

8. A wire straightening machine according to claim 7 characterised in that there is provided a device for detecting the speed of the wire (22) to be straightened. preferably a measuring wheel, for producing the speed input signals of the synchronous motor regulator for the servomotor of the feed unit (21) and the synchronous motor regulator for the servomotor of the straightening rotors (20).

9. A method of alternately operating a plurality of AC synchronous servomotors, characterised in that the resolver offset is set to be equal for all servomotors (1) by mechanical adjustment at the resolver portions (11) of the servomotors (1) and that both the main current supplied by the power portion of a single synchronous motor regulator (2) and also the revolver signals supplied by the control portion (5) of the synchronous motor regulator (2) and the resolver portions (11) of the servomotors (1) respectively are switched through by means of a common change-over switching control (18) by way of respective switching units (8, 10) between a respective one of the servomotors (1) and the single synchronous motor regulator (2).

10. A method according to claim 9 characterised in that the power portion (4) of the synchronous motor regulator (2) is deactivated during switching-over from one servomotor (1) to another.

## Revendications

1. Dispositif pour la commande en alternance de plusieurs servo-moteurs synchrones (1), auxquels un seul régulateur de moteur synchrone commun (2) est affecté, dont l'élément de puissance (4) peut être relié par des lignes de courant principales (6) à tous les servo-moteurs (1) et dont l'élément de commande (5) peut être relié par des lignes de synchro-décomposeurs (7) avec les synchro-décomposeurs (11) de tous les servo-moteurs (1), dans lequel pour la commutation entre les différents servo-moteurs (1), des unités de commutation (8, 10) qui peuvent être actionnées par une commande de commutation commune (18), sont disposées dans les lignes de courant principales (6) et dans les lignes de synchro-décomposeurs (7), et dans lequel, lors de la commutation entre deux servo-moteurs (1), le courant de sortie de l'élément de puissance (4) du régulateur de moteur synchrone (2) est désactivé.

2. Dispositif selon la revendication 1, caractérisé en ce que les unités de commutation (8, 10) dans les lignes de courant principales (6) et dans les lignes de synchro-décomposeurs (7) peuvent être actionnées de façon couplée par la commande de commutation commune (18), les unités de commutation (8, 10) dans les lignes de courant principales (6) et dans les lignes de synchro-décomposeurs (10) du servo-moteur respectivement commandé (1) étant fermées, et les unités de commutation (8, 10) dans les lignes de courant principales (6) et dans les lignes de synchrodécomposeurs (7) des autres servo-moteurs (1) étant ouvertes.

3. Dispositif selon l'une quelconque des revendications 1 ou 2, caractérisé en ce que des relais Reed sont prévus dans les lignes de synchro-décomposeurs (7) en tant qu'unités de commutation (10).

4. Dispositif selon l'une quelconque des revendications 1 à 3, caractérisé en ce que les unités de commutation (10) dans les lignes de synchro-décomposeur (7) sont protégées contre des champs parasites.

5. Dispositif selon la revendication 4, caractérisé en ce que les unités de commutation (10) dans les lignes de synchro-décomposeurs (7) sont disposées dans un boîtier commun (9).

6. Machine à dresser des fils métalliques pour dresser en alternance plusieurs fils métalliques, en particulier avec des diamètres différents, dans laquelle les rotors d'ajustement pour les fils métalliques peuvent être entraînés par des servo-moteurs synchrones, avec un dispositif pour la commande en alternance de servo-moteurs synchrones, selon l'une des revendications 1 à 5.

7. Machine à dresser des fils métalliques selon la revendication 6, caractérisée en ce que l'avance de la machine à dresser des fils métalliques peut également être entraînée par un servo-moteur synchrone qui présente son propre régulateur de moteur synchrone, le régulateur de moteur synchrone du servo-moteur pour l'avance et le régulateur de moteur synchrone des servo-moteurs pour les rotors d'ajustement étant couplés concernant leurs signaux d'entrée de vitesse.

8. Machine à dresser des fils métalliques selon la revendication 7, caractérisée en ce qu'un dispositif pour détecter la vitesse du fil métallique à redresser (22), de préférence une roue de mesure, est prévu pour mettre à disposition les signaux d'entrée de vitesse du régulateur de moteur synchrone pour le servo-moteur de l'unité d'avance (21) et du régulateur de moteur synchrone pour le servo-moteur des rotors d'ajustement (20).

9. Procédé de commande en alternance de plusieurs servo-moteurs synchrones, caractérisé en ce que le décalage du synchro-décomposeur est réglé de façon identique pour tous les servo-moteurs (1) par une compensation mécanique au niveau des éléments de synchro-décomposeur (11) des servo-moteurs (1), et en ce que le courant principal délivré par l'élément de puissance d'un seul régulateur de moteur synchrone (2) ainsi que les signaux de synchro-décomposeur délivrés par l'élément de commande (5) du régulateur de moteur synchrone (2) ou par les pièces de synchro-décomposeur (11) des servo-moteurs (1) sont connectés au moyen d'une commande de commutation commune (18) par l'intermédiaire d'unités de commutation respectives (8, 10) entre respectivement l'un des servo-moteurs (1) et l'unique régulateur de moteur synchrone (2).

10. Procédé selon la revendication 9, caractérisé en ce que pendant la commutation d'un servo-moteur (1) sur l'autre, l'élément de puissance (4) du régulateur de moteur synchrone (2) est désactivé.
